(19) Europäisches Patentamt
European Patent Office
Office européen des brevets

(11) Publication number: **0 325 719 A2**

# (12) EUROPEAN PATENT APPLICATION

(21) Application number: 88119313.0

(22) Date of filing: 21.11.88

(51) Int. Cl.4: C08K 5/52 , C08K 5/53 , C08K 3/32 , C08L 79/08 , C08L 69/00

(30) Priority: 29.12.87 US 139196

(43) Date of publication of application: 02.08.89 Bulletin 89/31

(84) Designated Contracting States: DE FR GB IT NL

(71) Applicant: GENERAL ELECTRIC COMPANY
1 River Road
Schenectady New York 12305(US)

(72) Inventor: Peters, Edward Norman
P.O. Box 775 51 West Street
Lenox Massachusetts 01240(US)
Inventor: Rock, John Andrew
RD No. 1
Hinsdale Massachusetts 01235(US)

(74) Representative: Catherine, Alain
General Electric France Service de Propriété Industrielle 18 Rue Horace Vernet B.P. 76
F-92134 Issy-les-Moulineaux Cédex(FR)

## (54) Melt stable polyetherimide-poly-carbonate blends.

(57) The present invention relates to melt stable polyetherimide polycarbonate blends further containing phosphorous containing stabilizers. These blends are characterized by reducing the occurence of transpolymerization during melt processing of the polymer blend.

EP 0 325 719 A2

# MELT STABLE POLYETHERIMIDE-POLYCARBONATE BLENDS

## BACKGROUND OF THE INVENTION

The present invention relates to unique polymer blend which exhibits high melt stabilities and reduces the occurrence of transpolymerization of the polymer components during melt processing.

Polymer blends containing a polycarbonate and polyetherimide are known and are the subject of U.S. Patent Nos. 4,548,997, 4,673,708 and 4,687,819. Unfortunately, in the commercial batch production of polycarbonate-polyetherimide blends, a single phase polymer product is periodically produced wherein during the melt processing transpolymerization occurs resulting in a product having a single glass transition temperature, undesirable impact performance and little solvent resistance. Therefore, there exists a need for a composition which overcomes the unpredictable nature of transpolymerization which occurs during batch production of polycarbonate-polyetherimide blends.

## SUMMARY OF THE INVENTION

In accordance with the present invention, there is disclosed a melt stable, two-phase polymer blend comprising a polyetherimide, a polycarbonate and a phosphorous-containing stabilizer selected from the group of an arylphosphonite, organic phosphite, or phosphonic acid or dihydric phosphate. These two-phase polymer blends maintain the beneficial properties of the polymer components while decreasing the occurance of transpolymerization and the amount of splay upon injection molding.

## DETAILED DESCRIPTION OF THE INVENTION

The melt stable two-phase polymeric blend of the present invention includes a polyetherimide of the formula:

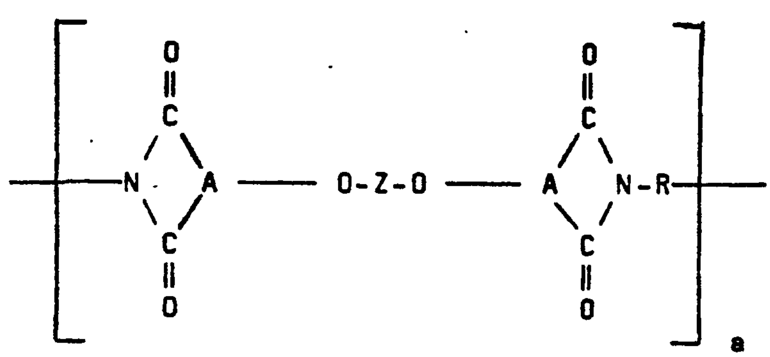

where "a" represents a whole number in excess of 1, e.g., 10 to 10,000 or more; the group -O-A is selected from:

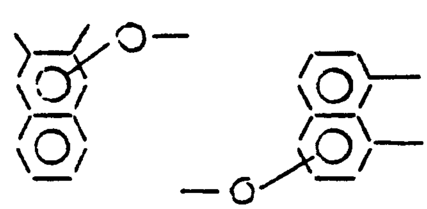

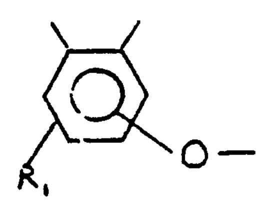

$R_1$ being hydrogen, lower alkyl or lower alkoxy and Z is a member from the class consisting of (1):

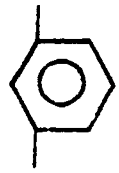
,
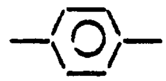
,
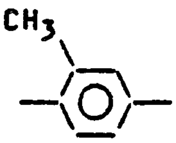
,
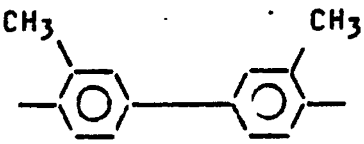
,
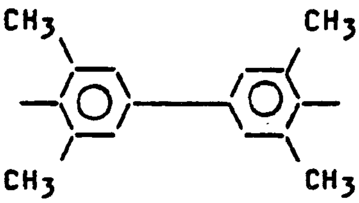

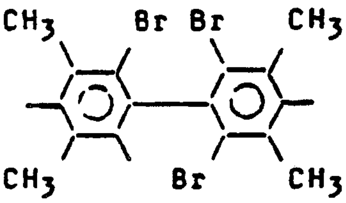
and
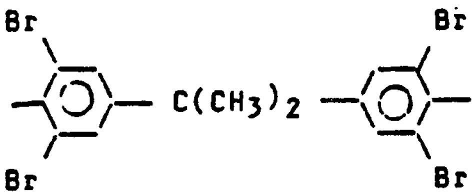

and (2) divalent organic radicals of the general structural formula:

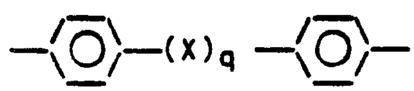

where X is a member selected from the class consisting of divalent radicals of the formulas,

$$-C_yH_{2y}-,\ -\overset{\overset{\displaystyle O}{\|}}{C}-,\ -\underset{\underset{\displaystyle O}{\|}}{\overset{\overset{\displaystyle O}{\|}}{S}}-,\ -O-\ \text{and}\ -S-$$

where q is 0 or 1, y is an integer from 1 to 5, and the divalent bonds of the -O-Z-O- radical are situated on the phthalic anhydride end groups, e.g., in the 3,3′, 3,4′, 4,3′ or the 4,4′ positions and R is a divalent organic radical selected from the class consisting of aromatic hydrocarbon radicals having from 6 to about 20 carbon atoms and halogenated derivatives thereof, alkylene radicals and cycloalkylene radicals having from about 2 to about 20 carbon atoms, $C_{(2-8)}$ alkylene terminated polydiorganosiloxane, and divalent radicals of the formula:

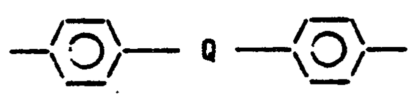

where Q is a member selected from the class consisting of

$$-O-,\ -\overset{\overset{\displaystyle O}{\|}}{C}-,\ -\underset{\underset{\displaystyle O}{\|}}{\overset{\overset{\displaystyle O}{\|}}{S}}-,\ \text{and}\ -C_xH_{2x}-,$$

and x is an integer from 0 to 5.

The polyetherimides can be obtained by any of the methods well known to those skilled in the art including the reaction of any aromatic bis(ether anhydride)s of the formula:

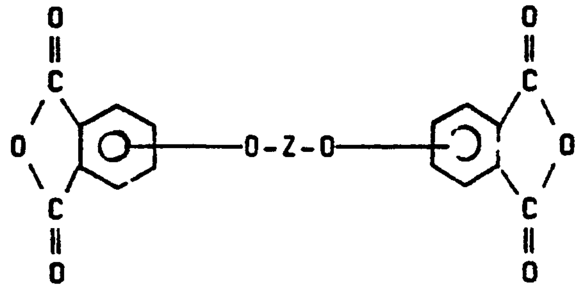

where Z is as defined hereinbefore with an organic diamine of the formula:
$H_2N - R - NH_2$
where R is as defined hereinbefore.

Aromatic bis(ether anhydride)s of the above formula include for example, 2,2-bis[4-2,3-dicarboxyphenoxy)-phenyl]phenyl ether dianhydride; 1,3-bis(2,3-dicarboxy-phenoxy)benzene dianhydride; 4,4′-bis-(2,3-dicarboxyphenoxy)diphenol sulfide dianhydride; bis(2,3-dicarboxyphenoxy)benzophenone dianhydride; 4,4′-bis(2,3-dicarboxyphenoxy)diphenyl sulfone dianhydride; etc., 2,2-bis[4-(3,4-dicarboxyphenoxy)phenyl]-propane dianhydride; 4,4′-bis(3,4-dicarboxyphenoxy)diphenyl ether dianhydride; 4,4′-bis(3,4-dicarboxyphenoxy)diphenyl sulfide dianhydride; 1,3-bis(3,4-dicarboxyphenoxy)benzene dianhydride; 1,4-bis(3,4-dicarboxyphenoxy)benzene dianhydride; 4,4′-bis(3,4-dicarboxyphenoxy)benzophenone dianhydride; 4-(2,3-dicarboxyphenoxy)-4′(3,4-dicarboxyphenoxy)diphenyl-2,2-propane dianhydride, etc. and mixtures of such dianhydrides.

In addition, aromatic bis(ether anhydride)s also included by the above formula are shown by Koton, M.M.; Florinski, F.S.; Bessonov, M.I.; Rudakov, A.P. (Institute of Heteroorganic Compounds, Academy of Sciences, U.S.S.R.), U.S.S.R. No. 257,010, Nov. 11, 1969, Appl. May 3, 1967. In addition, dianhydrides are shown by M.M. Koton, F.S. Florinski, Zh. Org. Khin, 4(5), 774 (1968).

Organic diamines of the above formula include for example, m-phenylenediamine, p-phenylenediamine, 4,4′-diaminodiphenylpropane, 4,4′-diaminodiphenylmethane, benzidine, 4,4′-diaminodiphenyl sulfide, 4,4′-diaminodiphenyl sulfone, 4,4′-diaminodiphenyl ether, 1,5-diaminonaphthalene, 3,3′-dimethylbenzidine, 3,3′-dimethoxybenzidine, 2,4-bis$\beta$-amino-t-butyl(toluene, bis(p-$\beta$-amino-t-butylphenyl)ether, bis(p-$\beta$-methyl-o-aminopentyl)benzene, 1,3-diamino-4-isopropylbenzene, 1,2-bis-(3-aminopropoxy)ethane, m-xylylenediamine, p-xylyenediamine, 2,4-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-dimethylpropylenediamine, octamethylenediamine, 3-methoxyethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine bis(3-aminopropyl)sulfide, N-methyl-bis(3-aminopropyl)amine, hexamethylenediamine, heptamethylenediamine, nonamethylenediamine, decamethylenediamine, bis(3-aminopropyl)tetramethyldisiloxane, bis(4-aminobutyl)tetramethyldisiloxane and the like, and mixtures of such diamines.

In general, the reactions can be advantageously carried out employing well-known solvents, e.g., o-dichlorobenzene, m-cresol/toluene, etc. in which to effect interaction between the dianhydrides and the diamines, at temperatures of from about 100° to about 250° C. Alternatively, the polyetherimides can be prepared by melt polymerization of any of the aforementioned dianhydrides with any of the aforementioned diamino compounds while compounds heating the mixture of the ingredients at elevated temperature with concurrent intermixing. Generally, melt polymerization temperatures between about 200° to 400° C, or higher are employed. Any order of addition of chain stoppers ordinarily employed in melt polymerization can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Generally, useful polyetherimides have an intrinsic viscotisy [$\eta$] greater than 0.2 deciliters per gram, preferably 0.35 to 0.60, or 0.7 deciliters per gram or even higher when measured in m-cresol at 25° C.

Included among the many methods of making the polyetherimides are those disclosed in U.S. Patent Nos. Heath et al., 3,847,867, Williams 3,847,869, Takekoshi et al. 3,850,885, White 3,852,242 and 3,855,178.

These disclosures are incorporated herein in their entirety by reference for the purpose of teaching, by way of illustration, general and specific methods for preparing polyetherimides suitable for the blends of this invention.

Polycarbonates for use in the blends of the invention are high molecular weight, thermoplastic, aromatic polymers and include homopolycarbonates, copolycarbonates and copolyestercarbonates and mixtures thereof which have average molecular weights of about 8,000 to more than 200,000, preferably of about 20,000 to 80,000 and an I.V. of 0.40 to 1.0 dl/g as measured in methylene chloride at 25° C. In one embodiment, the polycarbonates are derived from dihydric phenols and carbonate precursors and generally contain recurring structural units of the formula:

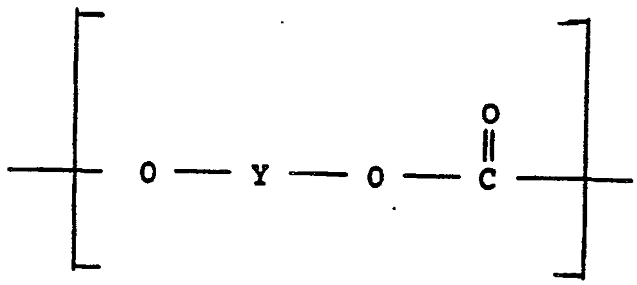

where Y is a divalent aromatic radical of the dihydric phenol employed in the polycarbonate producing reaction.

Suitable dihydric phenols for producing polycarbonates include the dihydric phenols such as, for example, 2,2-bis(4-hydroxyphenyl)propane, bis(4-hydroxyphenyl)methane, 2,2-bis(4-hydroxy-3-methylphenyl)propane, 4,4-bis(4-hydroxyphenyl)heptane, 2,2-(3,5,3′,5′-tetrachloro-4,4′-dihydroxyphenyl)propane, 2,2-(3,5,3′,5′-tetrabromo-4,4′dihydroxyphenyl)propane, and 3,3′-dichloro-4,4′-dihydroxydiphenyl)methane. Other dihydric phenols which are also suitable for use in the preparation of the above polycarbonates are disclosed in U.S. Patent Nos. 2,999,835, 3,038,365, 3,334,154, and 4,131,575, incorporated herein by reference.

It is of course possible to employ two or more different dihydric phenols or a copolymer of a dihydric phenol with a glycol or with a hydroxy- or acid-terminated polyester, or with a dibasic acid in the event a carbonate copolymer or interpolymer rather than a homopolymer is desired for use in the preparation of the blends of the invention. Blends of any of the above materials can also be employed to provide the aromatic polycarbonate. In addition, branched polycarbonates such as are described in U.S. Patent No. 4,001,184, can also be utilized in the practice of this invention, as can blends ofa linear polycarbonate and a branched polycarbonate.

The carbonate precursor employed can be either a carbonyl halide, a carbonate ester or a haloformate. The carbonyl halide which can be employed are carbonyl bromide, carbonyl chloride and mixtures thereof. Typical of the carbonate esters which can be employed are diphenyl carbonate, a di(halophenyl)carbonate such as di(chloropehnyl)carbonate, di(bromophenyl)carbonate, di(trichlorophenyl)carbonate, di-(tribromophenyl)carbonate, etc., di(alkylphenyl)carbonate such as di(tolyl)-carbonate, etc., di(naphthyl)-carbonate, di(chloronaphthyl)carbonate, etc., or mixtures thereof. The suitable haloformates include bis-haloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene, is preferred.

The polycarbonate may also be a copolyestercarbonate as described in Clayton B. Quinn in U.S. Patent No. 4,430,484 and the references cited therein, incorporated herein by reference. Preferred polyestercarbonates are those derived from the dihydric phenols and carbonate precursors described above and aromatic dicarboxylic acids or their reactive derivatives, such as the acid dihalides, e.g. dichlorides. A quite useful class of aromatic polyestercarbonates are those derived from bisphenol A; terephthalic acid, isophthalic acid or a mixture thereof or their respective acid chlorides; and phosgene. If a mixture of terephthalic acid and isophthalic acid is employed, the weight ratio of terephthalic acid to isophthalic acid may be from about 5:95 to about 95:5. A particularly preferred polycarbonate has from about 70 to about 95 weight percent ester content and a range of terephthalate groups of from 2 to about 15 weight percent of the total ester content. The remaining ester units are isophthalate units. These polycarbonates are more commonly known as polyphthalate carbonates and are described, for example, by Miller et al., U.S. Patent No. 4,465,820, herein incorporated by reference in its entirety.

The polycarbonates of the subject blends can be manufactured by known processes, such as, for

example, by reacting a dihydric phenol with a carbonate precursor such as diphenyl carbonate or phosgene in accordance with the methods set forth in the above-cited literature and U.S. Patent Nos. 4,018,750 and 4,123,436, or by transesterification processes such as are disclosed in the U.S. Patent No. 3,153,008, as well as other processes known to those skilled in the art.

The aromatic polycarbonates are typically prepared by employing a molecular weight regulator, an acid acceptor and a catalyst. The molecular weight regulators which can be employed include phenol, cyclohexanol, methanol, alkylated phenols, such as octylphenol, paratertiary-butyl-phenol, etc. Preferably, phenol or an alkylated phenol is employed as the molecular weight regulator.

The acid acceptor can be either an organic or an inorganic acid acceptor. A suitable organic acid acceptor is a tertiary amine and includes such materials as pyridine, triethylamine, dimethylaniline, tributylamine, etc. The inorganic acid acceptor can be one which can be either a hydroxide, a carbonate, a bicarbonate, or a phosphate of an alkali or alkaline earth metal.

The catalyst which can be employed are those that typically aid the polymerization of the monomer with phosgene. Suitable catalysts include tertiary amines such as triethylamine, tripropylamine, N,N-dimethylaniline, quaternary ammonium compounds such as, for example, tetraethylammonium bromide, cetyl triethyyl ammonium bromide, tetra-n-heptylammonium iodide, tetra-n-propyl ammonium bromide, tetramethylammonium chloride, tetra-methyl ammonium hydroxide, tetra-n-butyl ammonium iodide, benzyltrimethyl ammonium chloride and quaternary phosphonium compounds such as, for example, n-butyltriphenyl phosphonium bromide and methyltriphenyl phosphonium bromide.

Also included are branched polycarbonates wherein a polyfunctional armoatic compound is reacted with the monomer and carbonate precursor to provide a thermoplastic randomly branched polycarbonate. The polyfunctional aromatic compounds contain at least three functional groups which are carboxyl, carboxylic anhydride, haloformyl, or mixtures thereof. Illustrative polyfunctional aromatic compounds which can be employed include trimellitic anhydride, trimellitic acid, trimellityl trichloride, 4-chloroformyl phthalic anhydride, pyromellitic acid, pyromellitic dianhydride, mellitic acid, mellitic anhydride, benzophenonetetracarboxylic anhydride, and the like. The preferred polyfunctional aromatic compounds are trimellitic anhydride and trimellitic acid or their acid halide derivatives.

The melt stabilized two-phase polymer blend of the present invention includes a phosphorous containing stabilizer selected from an aryl phosphonite, an organic phosphite, phosphonic acid and a dihydric phosphate.

The aryl phosphites which may be used in the present invention are of the structural formula:

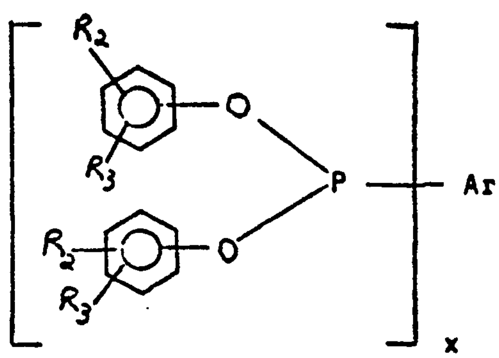

wherein x is an integer from 1 to 3 and wherein $R_2$ and $R_3$ may be the same or different and are each selected from the group consisting of alkyl radicals having from 1 to 20 carbon atoms, and Ar is a monocyclic or polycyclic group containing from 6 to 18 carbon atoms. Preferably x is 2, $R_2$ and $R_3$ are independently selected from the group consisting of alkyl radicals having 2 to 10 carbon atoms and Ar is a polycyclic aromatic group having 12 to 18 carbon atoms. Particularly preferred arylphosphonites are those in which x is 2, $R_2$ and $R_3$ are alkyl radicals having 4 carbon atoms and Ar is p-diphenylene. A commercially available compound which is an example of the particularly preferred arylphosphonites having the formula:

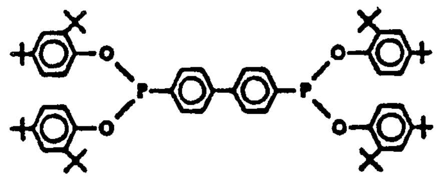

and is known as SandostabTM PEPQ, which is commercially available from Sandoz Colors and Chemicals, East Hanover, N.J., U.S.A.

The organic phosphites which may be used in the present invention are of the structural formula:

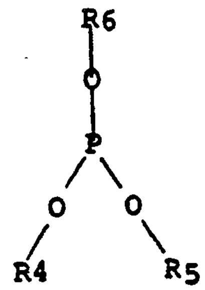

where $R_4$, $R_5$ and $R_6$ may be the same or different and are selected from the group of radicals consisting of alkyl having 12 to 25 carbon atoms, alkaryl having 10 to 14 carbon atoms and aryls of from 6 to 18 carbon atoms. Preferably $R_4$, $R_5$ and $R_6$ are independently selected from the group consisting of alkaryls having 12 to 14 carbon atoms with alkaryls of 14 carbon atoms being the most preferred.

Other organic phosphites that can be used are of the structural formula:

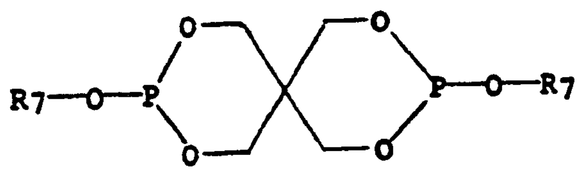

wherein $R_7$ may be the same or different and is selected from the group of radicals consisting of alkyls of from 15 to 25 carbon atoms, aryls of from 6 to 24 carbon atoms, and alkaryls having from 7 to 18 carbon atoms. In preferred compounds of the formula $R_6$ is an alkyl containing from 15 to 20 carbon atoms.

The phosphonic acids which can be used in the present invention are of the formula:

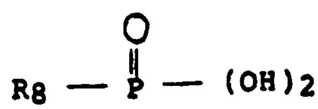

where $R_8$ is selected from hydrogen, alkyl radicals having from 6 to 30 carbon atoms and aryl radicals having 6 to 15 carbon atoms. Preferably, $R_8$ is hydrogen or an aryl radical having 6 carbon atoms.

The dihydric phosphates which can be used in the present invention are of the formula:

$MH_2PO_4$

where M is selected from sodium and potassium. Preferably M is sodium.

In accordance with the present invention, a variety of weight ratios of the components may be used to form the melt stable two-phase polymer blend. The polyetherimide component is generally present in amounts of from 1 to 98 percent of the total weight of the melt stable two-phase polymer blend. Preferably, the polyetherimide is present in amounts of from 5 to 95 percent of the blend. The polycarbonate component is generally present in amounts of from about 1 to about 98 percent by weight of the total weight of the blend. Preferably, the polycarbonate is present in amounts of from about 5 to about 95 percent by weight of the total ternary blend. The concentration of the phosphorus containing stabilizer in the polyetherimide/polycarbonate blend may vary widely, providing that stabilizing amounts of the antioxidant

are employed. These amounts generally range from about 0.01 weight percent to about 1.0 weight percent of the two component polymer blend. Preferably the amount of stabilizer is from .025 to 0.5 weight percent of the polymer blend. A particularly preferred amount is from about 0.05 to about 0.3 weight percent of the polymer blend.

The invention is further illustrated by the following examples which are not intended to be limiting to the scope of the present invention.

## Examples

Several batches of polyetherimide/polycarbonate (PEI/PC) blends were blended with a variety of phosphorous containing stabilizers described above. These materials were melt mixed in a Haake bowl at 343° C or 315° C. The polyetherimide that was used was Ultem® 1000, commercially available from the General Electric Company, Pittsfield, Mass. The polycarbonate that was used in the 1:1 PEI:PC blend was Lexan® 4701. The polycarbonate that was used in the 7:3 PEI:PC blends was Lexan® 131. Both of these polycarbonates are commercially available from General Electric Company, Pittsfield, Mass. The diphenyl phosphite (DPP) was Weston® DPP and is commercially available from Borg Warner Corporation of Chicago, Illinois. The phenylphosphonic acid appears in the table as "PPA." Phosphorous acid appears in the table as "PA." The aryl phosphonite was Sandstab™ PEPQ, which is commercially available from Sandoz Colors and Chemicals of East Hanover, N.J. The tris-nonylphenol phosphate (TNPP) was Weston® TNPP and is available from Borg Warner Corporation of Chicago, Illinois.

Table I below lists the relative weight percentages of the components, the stabilizer and the resulting changes in glass transition temperature and intrinsic viscosity of the blend while subjecting the blend under constant mixing for a specified period at 315° C or 343° C. The 1:1 PEI:PC blends were evaluated at 343° C and the 7:3 PEI:PC blends at 315° C.

TABLE I

| Weight Ratio of PEI/PC | Stabilizer | 1 minute | | 5 minutes | | 9 minutes | | 12 minutes | | 16 minutes | | 22 minutes | | 30 minutes | |
|---|---|---|---|---|---|---|---|---|---|---|---|---|---|---|---|
| | | Tg°C | I.V. | Tg°C | I.V. | Tg°C | I.V. | Tg°C | I.V. | Tg°C | I.V. | Tg°C | I.V. | Tg°C | I.V. |
| 1:1 | None | 182/213 | 0.52 | 182/210 | 0.52 | | | 194 | 0.49 | | | 191 | 0.46 | 190 | 0.45 |
| 1:1 | 0.1% DPP | 180/212 | 0.50 | 178/209 | 0.47 | | | 177/206 | 0.45 | | | 176/202 | 0.44 | 176/201 | 0.42 |
| 1:1 | 0.05% DPP | 181/213 | 0.50 | 180/211 | 0.50 | | | 180/207 | 0.49 | | | 177/205 | 0.46 | 178/206 | 0.43 |
| 1:1 | 0.025% DPP | 182/216 | 0.54 | 180/211 | 0.40 | | | 177/209 | 0.49 | | | 176/205 | 0.45 | 177/203 | 0.46 |
| 1:1 | None | 182/213 | 0.50 | 181/213 | 0.47 | 179/210 | 0.45 | 179/210 | 0.45 | | | 197 | 0.41 | 193 | 0.39 |
| 1:1 | 0.1% TNPP | 181/213 | 0.51 | 179/213 | 0.45 | 179/213 | 0.44 | 179/212 | 0.45 | | | 179/209 | 0.44 | 180/208 | 0.44 |
| 1:1 | 0.1% TNPP 7.5% $TiO_2$ | 181/216 | 0.48 | 181/213 | 0.48 | 179/213 | 0.45 | 180/213 | 0.44 | | | 179/212 | 0.43 | 179/210 | 0.42 |
| 7:3 | None | 212/147 | 0.534 | | | 188 | 0.554 | 187 | 0.612 | 187 | 0.610 | 187 | 0.774 | 187 | gels |
| 7:3 | 1% Sandostab PEPQ | 213/142 | 0.532 | | | | | 213/147 | 0.490 | 211/147 | 0.528 | 206/147 | 0.497 | 201/149 | 0.497 |
| 7:3 | 0.2% Sandostab PEPQ | 214/146 | 0.540 | | | | | 213/146 | 0.541 | 212/147 | 0.494 | 211/143 | 0.499 | 211/146 | 0.509 |
| 7:3 | 2.5% $TiO_2$ and 0.1% Sandostab PEPQ | 214/147 | 0.540 | | | | | 214/147 | 0.502 | 213/145 | 0.508 | 213/146 | 0.499 | 211/146 | 0.49 |
| 7:3 | 0.1% Sandostab PEPQ | 214/146 | 0.530 | | | | | 214/146 | 0.510 | 214/146 | 0.512 | 214/145 | 0.517 | 211/145 | 211/ 144 |
| 7:3 | 0.1% PPA | 213/147 | 0.527 | | | | | 214/144 | 0.520 | 211/144 | 0.530 | 210/144 | 0.509 | 209/143 | 0.497 |
| 7:3 | 0.1% PPA | 215/147 | 0.552 | | | | | 208/146 | 0.513 | 204/147 | 0.511 | 199/149 | 0.493 | | |
| 7:3 | 0.1% PPA and 2.5% $TiO_2$ | 215/147 | 0.533 | | | | | 214/144 | 0.503 | | | 211/145 | 0.490 | 211/142 | 0.482 |
| 7:3 | 0.1% BA | 214/149 | 0.538 | | | 214/147 | 0.510 | 213/145 | 0.520 | | | | | 211/137 | 0.447 |

Another series of polyetherimide/polycarbonate blends were melt blend extruded with a variety of phosphorous containing stabilizers described above. The melts were extrusion blended at temperature profiles ranging from about 530°F - 580°F. The parts were molded using 650°F barrel settings. The polyetherimide that was used was Ultem® 1000. The polycarbonate that was used in the 1:1 PEI:PC blend was Lexan® 4701 and the polycarbonate used in the 7:3 PEI:PC blends was Lexan® 131. The initials for each stabilizer listed in Table II are the same as Table I. In addition, the initials "SDP" represent sodium dihydrogen phosphate and "DPDP" represents diphenyl isodecyl phosphate which is sold under the trademark Weston® DPDP and is commercially available from Borg Warner Corporation of Chicago, Illinois.

Table II below lists the relative weight percentages of the components, the stabilizer, the appearance of the molded part, the melt index, notched Izod (as determined by ASTM D-256) and the glass transition temperatures of the blends.

TABLE II

| Weight Ratio of PEI/PC | PEI Lot No. | Stabilizer | Appearance | 300° C MI (g/min.) | Notched Izod (ft.-lb/in) | Tg (° C) |
|---|---|---|---|---|---|---|
| 7:3 | TM 205 | None | clear-1 phase | --- | 0.3 | --- |
| 7:3 | TM 205 | None | clear-1 phase | 1.6 | 0.3 | --- |
| 7:3 | TM 205 | 0.1% P-E PQ | opaque-2 phase | 0.67 | 1.0 | --- |
| 7:3 | TM 205 | 0.1% DPP | opaque-2 phase | 0.55 | 1.1 | 147/214 |
| 7:3 | TM 205 | 0.3% DPP | opaque-2 phase | 0.84 | 1.0 | 146/213 |
| 7:3 | UA 2042 | None | clear-1 phase | 1.8 | 0.3 | --- |
| 7:3 | UA 2042 | 0.1% P-EPQ | opaque-2 phase | 1.1 | 1.0 | --- |
| 7:3 | UA 2042 | .025% DPP | opaque-2 phase | 0.82 | 0.9 | 146/211 |
| 7:3 | UA 2042 | 0.1% DPP | opaque-2 phase | 0.61 | 0.9 | --- |
| 7:3 | UA 2100 | None | clear-1 phase | 1.4 | 0.3 | --- |
| 7:3 | UA 2100 | 0.1% P-EPQ | opaque-2 phase | 1.1 | 0.8 | --- |
| 7:3 | UA 2100 | .05% DPP | opaque-2 phase | 0.51 | 1.2 | 146/214 |
| 7:3 | UA 2100 | .01% DPP | opaque-2 phase | 0.62 | 1.2 | --- |
| 7:3 | UA 2100 | .01% DPDP | opaque-2 phase | --- | 1.0 | --- |
| 1:1 | UA 2100 | 0.05% SDP[1] | opaque-2 phase | --- | 2.1 | --- |
| 1:1 | UA 2100 | 0.05% TNPP[1] | opaque-2 phase | --- | 1.3 | --- |
| 1:1 | UA 2100 | None | translucent-1 phase | --- | 0.4 | --- |

[1] Lexan 131 was used and the polyetherimide was prestabilized Ultem 1000 resin by extruding with 0.1% of stabilizer

The above data demonstrates that the addition of a phosphorous stabilizer to the polyetherimide/polycarbonate blends constributes signficantly to the stability of the blend upon prolonged exposure to high temperatures.

## Comparative Examples

For comparative purposes, a series of polyetherimide polycarbonate (PEI-PC) blends were blended with a variety of known stabilizers (non-phosphorous containing). These materials were melt mixed in a Haake bowl at approximately 343° C. The polyetherimide that was used was Ultem® 1000, and the polycarbonate was Lexan® 131. Both of the hindered phenol stabilizers (Irganox 1010 and 1076) are commercially available compounds from Ciba-Geigy Corporation, Ardsley, New York. The ERL-4221 is a cycloaliphatic epoxide and was obtained from Union Carbide Corporation.

Table III below lists the relative weight percentages of the components, the resulting changes in glass transition temperature and intrinsic viscosity of the blend while subjecting the blend to a specified period at 315° C under constant mixing.

TABLE III

| Weight Ratio of PEI/PC | Stabilizer | 1 minute | | 9 minutes | | 12 minutes | | 16 minutes | |
|---|---|---|---|---|---|---|---|---|---|
| | | Tg°C | I.V. | Tg°C | I.V. | Tg°C | I.V. | Tg°C | I.V. |
| 1:1 | None | 212/147 | 0.53 | 188 | 0.55 | 187 | 0.61 | 187 | 0.61 |
| 1:1 | 0.2% Irganox 1010 | 204/143 | 0.47 | 189 | 0.46 | 187 | 0.45 | 187 | 0.44 |
| 1:1 | 0.2% Irganox 1076 | 202/143 | 0.51 | 188 | 0.49 | 186 | 0.48 | 187 | 0.45 |
| 1:1 | 0.2% ERL-4221 | 210/145 | 0.50 | 188 | 0.51 | 187 | 0.50 | --- | --- |

While the present invention has been described with reference to particular embodiments thereof, it will be understood that numerous modifications may be made by those skilled in the art without actually departing from the spirit and scope of the invention as defined in the appended claims.

## Claims

1. A melt stable two-phase polymeric blend comprising (a) a polyetherimide; (b) a thermoplastic polycarbonate and a phosphorous containing stabilizer selected from the group consisting of (a) an aryl phosphonate of the formula:

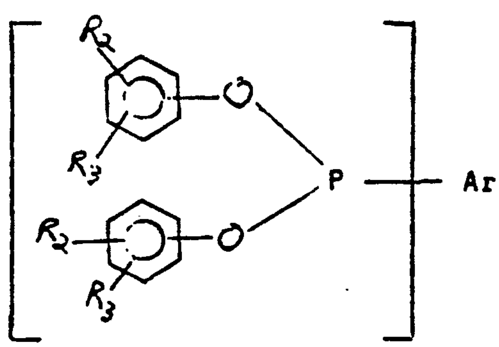

where x is an integer from 1 to 3, $R_1$ and $R_2$ may be the same or different and are selected from the group consisting of alkyl radicals having 1 to 20 carbon atoms and Ar is a monocyclic or polycyclic aromatic group containing from 6 to 18 carbon atoms; (b) an organic phosphite of the formula:

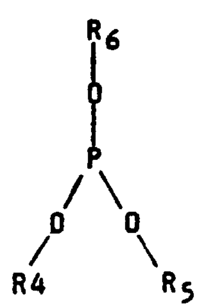

where $R_4$, $R_5$ and $R_6$ may be the same or different and are selected from the group consisting of alkyl radicals having 12 to 25 carbon atoms, alkaryl radicals having 10 to 14 carbon atoms and aryl radicals having 6 to 18 carbon atoms; or of the formula:

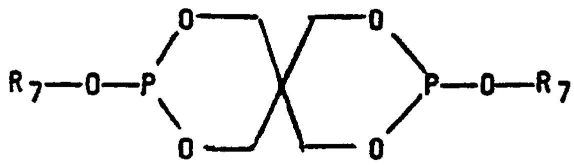

wherein $R_7$ may be the same or different and is selected from the group of radicals consisting of alkyls of from 15 to 25 carbon atoms, aryls of from 6 to 24 carbon atoms, and alkaryls having from 7 to 18 carbon atoms; and (c) a phosphonic acid of the formula:

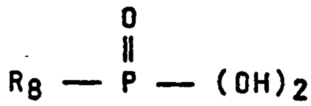

wherein $R_8$ is a radical selected from the group consisting of hydrogen, alkyls having from 6 to 30 carbon atoms and aryls having from 6 to 15 carbon atoms and (d) a dihydric phosphonate of the formula:
$MH_2PO_4$
wherein M is a radical selected from sodium and potassium.

2. The melt stable two-phase polymeric blend of claim 1 wherein said aryl phosphonate is of the formula:

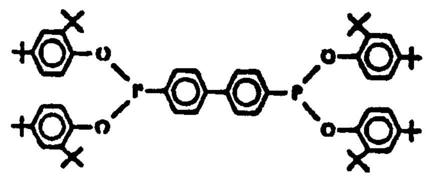

3. The melt stable two-phase polymeric blend of claim 1 wherein the polyetherimide contains repeating units of the formula:

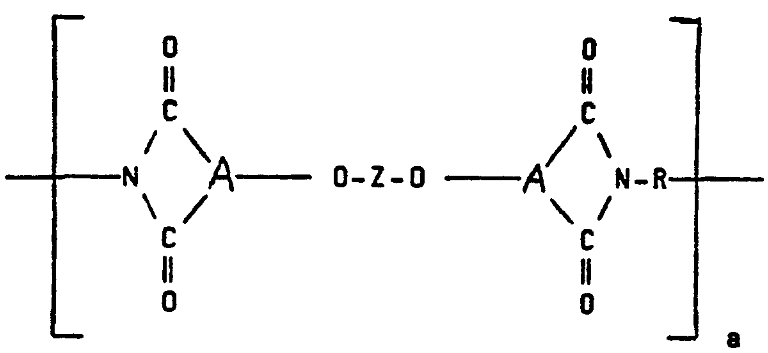

where "a" represents a whole number in excess of 1, e.g., 10 to 10,000 or more, the group -O-A is selected from:

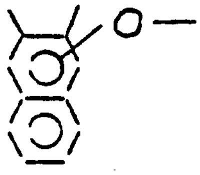
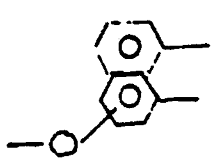
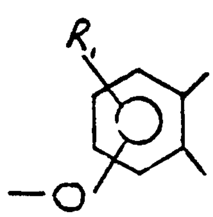

$R_1$ being hydrogen, lower alkyl or lower alkoxy; Z is a member of the class consisting of (1)

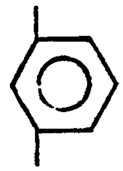,
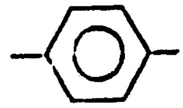,
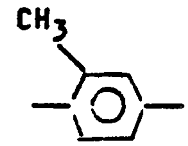,
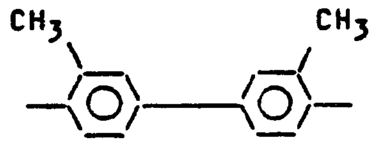,
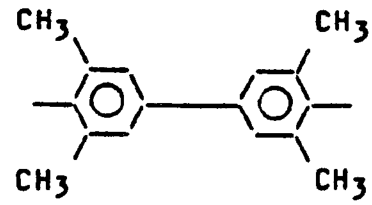
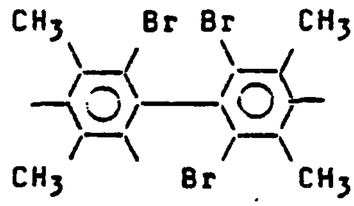
and
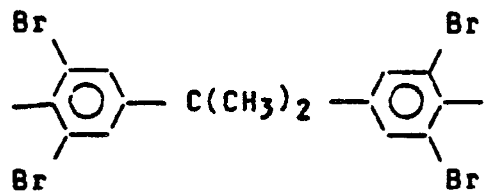

and (2) divalent organic radicals of the general formula:

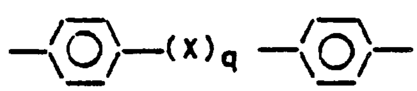

where X is a member selected from the class consisting of divalent radicals of the formulas,

$$-C_yH_{2y}-,\quad -\overset{O}{\overset{\|}{C}}-,\quad -\underset{O}{\underset{\|}{\overset{O}{\overset{\|}{S}}}}-,\quad -O-\ \text{and}\ -S-$$

where q is 0 or 1, y is a whole number from 1 to 5, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from 2 to about 20 carbon atoms, $C_2$ to $C_8$ alkylene terminated polydiorganisiloxane, and (3) divalent radicals included by the formula:

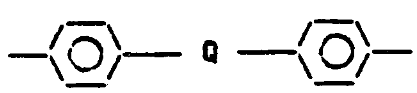

where Q is a member selected from the class consisting of

$$-O-,\quad -\overset{O}{\overset{\|}{C}}-,\quad -\underset{O}{\underset{\|}{\overset{O}{\overset{\|}{S}}}}-,\ \text{and}\ -C_xH_{2x}-,$$

where x is a whole number from 1 to 5 inclusive.

4. The melt stable, two-phase polymeric blend of claim 2, wherein Z is

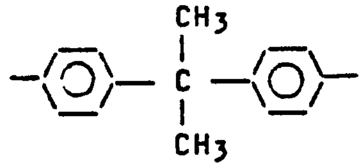

and R is selected from:

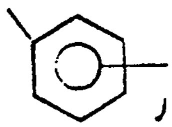

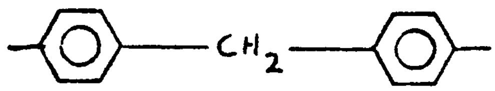

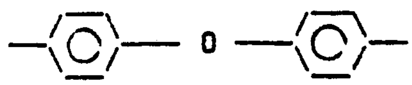

and

5. The melt stable, two-phase polymeric blend of claim 1 wherein the polycarbonate is derived from a dihydric phenol and a carbonate precursor.

6. The melt stable, two-phase polymeric blend of claim 5, wherein said dihydric phenol is 2,2-bis(4-hydroxyphenyl) propane and the carbonate precursor is carbonyl chloride.

7. The melt stable, two-phase polymeric blend of claim 5, wherein said dihydric phenol is 2,2-bis(4-hydroxyphenol)propane and the carbonate precursors is diphenyl carbonate.

8. The melt stable two-phase polymeric blend of claim 5, wherein the polycarbonate contains recurring structural units of the formula:

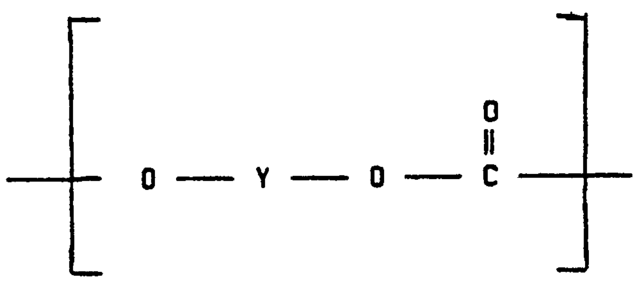

where Y is a divalent aromatic radical of the dihydric phenol employed in the polycarbonate producing reaction.

9. The melt stable two-phase polymeric blend of claim 1, wherein said polycarbonate is a polyphthalate carbonate prepared from a dihydric phenol, a carbonate precursor, a terephthalic acid or ester-forming derivative thereof, an isophthalic acid or ester-forming derivative thereof, said polyphthalate carbonate having from about 70 to 95 weight percent ester content and a range of terephthalate groups ranging from about 2 to about 15 percent of the ester content.

10. The melt stable, two-phase polymeric blend of claim 9 wherein the weight percent ester content is from 75 to 90.

11. The melt stable, two-phase polymeric blend of claim 10 wherein the range of terephthalate groups range from about 5 to about 10 percent of the ester content.

12. The melt stable, two-phase polymeric blend of claim 1 wherein the polyetherimide comprises from about 1 to about 98 percent by weight, the polycarbonate comprises from about 1 to about 98 percent by weight and from 0.01 to about 1.0 percent by weight is said phosphorous containing component, all parts by weight being based on the sum weight of the polyetherimide, polycarbonate, and phosphorous containing compound.

13. The melt stable, two-phase polymeric blend of claim 12 wherein the polyetherimide comprises from about 5 to about 95 percent by weight, the polycarbonate comprises from about 5 to about 95 percent by weight and the phosphorous containing stabilizer comprises from about .025 to 0.5 weight percent by weight.